# EUROPEAN PATENT SPECIFICATION

(11) **EP 3 660 495 B1**
(45) Date of publication and mention of the grant of the patent: **08.11.2023**
(21) Application number: 18837288.2
(22) Date of filing: 12.06.2018
(51) Int. Cl.: G01N 23/04, B65G 13/02, B65G 19/00, G01V 5/00

(54) **CONVEYING DEVICE FOR VEHICLE INSPECTION SYSTEM AND VEHICLE INSPECTION SYSTEM**
FÖRDERVORRICHTUNG FÜR FAHRZEUGINSPEKTIONSSYSTEM UND FAHRZEUGINSPEKTIONSSYSTEM
DISPOSITIF DE TRANSPORT POUR SYSTÈME D'INSPECTION DE VÉHICULE ET SYSTÈME D'INSPECTION DE VÉHICULE

(30) Priority: 27.07.2017 CN 201710621021
(43) Date of publication of application: 03.06.2020
(73) Proprietor: Nuctech Company Limited, Beijing 100084 (CN)
(72) Inventor: SONG, Quanwei, Beijing 100084 (CN); SHI, Junping, Beijing 100084 (CN); HE, Yuan, Beijing 100084 (CN); MENG, Hui, Beijing 100084 (CN); HE, Jiaming, Beijing 100084 (CN); MA, Yuan, Beijing 100084 (CN); WANG, Qiangqiang, Beijing 100084 (CN)
(74) Representative: Meissner Bolte Partnerschaft mbB
(86) International application number: PCT/CN2018/090772
(87) International publication number: WO 2019/019824

(56) References cited:
- CN-A- 105 438 756
- CN-A- 106 185 224
- CN-A- 106 840 235
- CN-A- 106 904 394
- CN-A- 107 271 465
- CN-U- 203 798 748
- JP-A- 2000 039 404

## Description

### Related Application(s)

The present application claims priority to China Patent Application No. 201710621021.9 filed on July 27, 2017 for "vehicle inspection system conveyor and vehicle inspection system.

### Technical Field

The present disclosure relates to the field of radiation imaging inspection technology, in particular to a vehicle inspection system conveyor and a vehicle inspection system.

### Background

In X-ray inspection systems for small vehicles a top-mounted radiation source often is adopt, while detectors are located on both sides and bottom to receive radiation.

In the prior art, a vehicle being inspected is in most cases dragged through a scanning area by a conveyor and, for easy placement of X-ray detectors that receive X-rays, a conveyor of X-ray inspection systems with a top-mounted radiation source is divided into two sections in the front and rear of the scanning area to avoid the impact of conveyors on imaging quality.

In the process of finding the present disclosure, the designers found the following deficiencies in the way to divide the conveyor into two sections:
an unpowered section exists at the junction of the front and rear sections of the conveyor because of frame setting, the turning of the conveying part and other structural reasons; in the event that the conveyor drags the vehicle being inspected to pass through the scanning area after a driver pulls a handbrake in parking, front wheels of a small vehicle will slip when passing through the unpowered section if rear wheels are locked, which will brings the vehicle to a standstill and therefore affect inspection process and image quality;
propellers need to be provided on both sections in the front and rear the conveyor respectively for a smooth handover between the two sections. The need to accurately judge when the propellers should conduct handover during the handover process makes the control process complicated;
diversified varieties of vehicles being inspected and great differences in wheel sizes and structures cause the handover process to be unstable, thus affecting image quality.

CN203798748U provides a safety inspection system for passenger cars including a transmission device including a first powertrain unit and a second powertrain unit, and the first powertrain unit and the second powertrain unit are respectively disposed at the entrance end and the outlet end of the X-ray cabin, the first powertrain unit and the second powertrain unit are driven by independent chain transmissions, and the conveying directions of the first powertrain unit and the second powertrain unit are the same.

### Summary

The purpose of the present disclosure is to provide a vehicle inspection system conveyor and a vehicle inspection system, aiming to prevent vehicles being inspected from remaining stationary as a result of the existence of an unpowered section between front and rear sections of conveyors.

A first aspect of the present disclosure provides a vehicle inspection system conveyor according to independent claim 1, configured to convey a vehicle being inspected within a conveying range from front to rear through a scanning area of the vehicle inspection system; the vehicle inspection system conveyor comprises a first conveying device and a second conveying device arranged side by side; within the conveying range where the vehicle being inspected is conveyed, the first conveying device comprises at least one first powered section which provides driving force to the vehicle being inspected and at least one first unpowered section which does not provide driving force to the vehicle being inspected; the second conveying device comprises at least one second powered section which provides driving force to the vehicle being inspected within the conveying range where the vehicle being inspected is conveyed; the first unpowered section is located at a position in front and rear directions within the range of the at least one powered section in front and rear directions.

In some embodiments, the at least one first powered section comprises a first front-side powered section arranged in the front of the scanning area and a first rear-side powered section arranged in the rear of the scanning area, and the first unpowered section is arranged between the first front-side powered section and the first rear-side powered section.

In some embodiments, the at least one first powered section further comprises a first intermediate powered section arranged between the first front-side powered section and the first rear-side powered section, and the at least one first unpowered section comprises a first front-side unpowered section located between the first front-side powered section and the first intermediate powered section and a first rear-side unpowered section located between the first rear-side powered section and the first intermediate powered section.

In some embodiments, the first intermediate powered section comprises a plurality of conveying rollers of a first chain roller conveyor.

In some embodiments, the at least one second powered section comprises a second intermediate powered section located in the middle of the vehicle inspection system conveyor in front and rear directions.

In some embodiments, the first unpowered section is located at a position in front and rear directions within the range of the second intermediate powered section in front and rear directions.

In some embodiments, the second intermediate powered section comprises a plurality of conveying rollers of a second chain roller conveyor.

In some embodiments, within the conveying range where the vehicle being inspected is conveyed, the second conveying device further comprises at least one second unpowered section which does not provide driving force to the vehicle being inspected, and the second unpowered section is located at a position in front and rear directions within the range of the at least one first powered section in front and rear directions.

In some embodiments, the at least one second powered section comprises a second front-side powered section arranged in the front side of the scanning area, a second rear-side powered section arranged in the front side of the scanning area, and a second intermediate powered section located between the second front-side powered section and the second rear-side powered section, and the three sections are successively arranged in front and rear directions; the at least one second unpowered section comprises a second front-side unpowered section located between the second front-side powered section and the second intermediate powered section and a second rear-side unpowered section located between the second rear-side powered section and the second intermediate powered section.

A second aspect of the present disclosure provides a vehicle inspection system comprising a conveyor of the vehicle inspection system mentioned in any of the first aspect of the present disclosure.

For the vehicle inspection system conveyor and the vehicle inspection system provided in the present disclosure, the vehicle inspection system conveyor comprises the first conveying device and the second conveying device set side by side, and the first unpowered section of the first conveyor is located at a position in front and rear directions within the range of the at least one second powered section of the second conveying device in front and rear directions, which allows the vehicle inspection system conveyor to provide driving force to the vehicle being inspected within the conveying range where the vehicle being inspected is conveyed, thus preventing vehicles being inspected from remaining stationary as a result of the existence of an unpowered section between front and rear sections of the vehicle inspection system conveyor and affecting to the inspection process and image quality caused by the in-situ stagnation of vehicles being inspected can be reduced or avoided. In whole-process through the scanning area imposing driving forces to vehicles being inspected by the vehicle inspection system conveyor helps to skip the handover process and simplify the control process, and with the handover process skipped, image quality is no longer affected by unstable handover process.

Other features of the present disclosure and advantages of the features can be understood more clearly from the following detailed description of exemplary embodiments of the invention with reference to the accompanying drawings.

### Brief Description of the Drawings

The accompanying drawings, which constitute part of this application, are intended to provide a further understanding of the present disclosure. The exemplary embodiments of the disclosure and description thereof serve to explain the present disclosure, but do not constitute improper restrictions on the present disclosure. In the drawings:

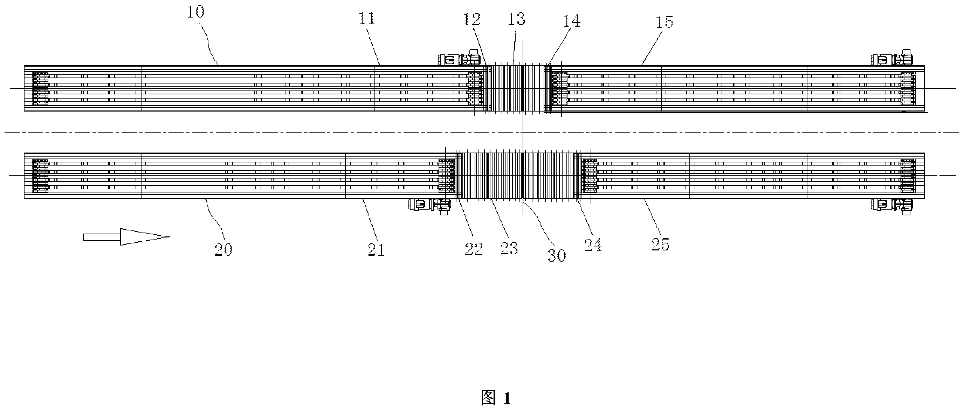

Fig. 1 is a schematic diagram of a vehicle inspection system conveyor of an embodiment in the present disclosure.

### Detailed Description of the Preferred Embodiments

Together with the Figures in the embodiments of the present disclosure, the following text will describe clearly and completely the technical solution implemented in the embodiments of the present disclosure. Obviously, the embodiments described are merely part of embodiments implemented in the present disclosure, not all embodiments. The following description of at least one exemplary embodiment is in fact illustrative only and is in no way intended to limit the present disclosure and its application or use.

Relative arrangement of components and steps, numerical expressions, and numerical values set forth in these embodiments, unless specifically stated otherwise, should not be explained as a limitation on the present disclosure.. It should be understood that the dimensions of the various parts shown in the accompanying drawings are for descriptive purposes and are not necessarily drawn according to the actual scale. Techniques, methods, and apparatus known to those of ordinary skill in the relevant art may not be discussed in detail, but where appropriate, these techniques, methods, and apparatuses should be considered as part of this specification. In all the examples shown and discussed here, any specific value should be interpreted as merely exemplary and not as a limitation. Therefore, other examples of the exemplary embodiments may have different values. It should be noted that similar labels and letters represent similar items in the accompanying drawings below, and therefore, any item already defined in one accompanying drawing does not need to be further discussed in subsequent accompanying drawings.

The use of the terms "first", "second" and similar words when describing the present disclosure are merely used to distinguish between different parts and have no special meaning unless otherwise stated, therefore cannot be construed as limiting the scope of protection of the present disclosure.

It should be noted that nouns of locality used to describe the present disclosure, such as "front, rear, top, bottom, left and right", "transverse, vertical, perpendicular and horizontal" and "top and bottom" are for the convenience of describing the present disclosure and simplifying the description only and, in the absence of a statement to the contrary, do not indicate or imply that the device or element in question must have a particular orientation or be constructed and operated in a particular orientation, and therefore cannot be understood as a limitation on the scope of protection of the invention; Terms "inside" and "outside" refer to the inside and outside of the outline of each component.

In the following description, "front" means the upstream side of the vehicle inspection system conveyor of the vehicle inspection system; "Rear" refers to the side opposite to "front", while "left" and "right" refer to the left and right directions when facing forward.

Fig. 1 is a schematic diagram of a vehicle inspection system conveyor of an embodiment in the present disclosure. Vehicle inspection system conveyor of the present embodiment is configured to convey a vehicle being inspected within a conveying range from front to rear to through a scanning area of a vehicle inspection system. In Fig. 1, where the driving direction of the vehicle being inspected is indicated by an arrow, so in the following descriptions, "front" refers a direction opposite to the arrow direction and "rear" refers to the arrow direction in Fig. 1.

As shown in Fig. 1, a vehicle inspection system conveyor comprises a first conveying device 10 and a second conveying device 20 set side by side. Within the conveying range where the vehicle being inspected is conveyed, the first conveying device 10 comprises at least one first powered section which provides driving force to the vehicle being inspected and at least one first unpowered section which does not provide driving force to the vehicle being inspected. Within the conveying range where the vehicle being inspected is conveyed, the second conveying device 20 comprises at least one second powered section which provides driving force to the vehicle being inspected. The first unpowered section is located at a position in front and rear directions within the range of the at least one second powered section in front and rear directions.

The first unpowered section is located at a position in front and rear directions within the range of the at least one second powered section in front and rear directions, which allows the vehicle inspection system conveyor to provide driving force to vehicles being inspected within the conveying range where the vehicles are conveyed, thus preventing vehicles being inspected from remaining stationary as a result of the existence of an unpowered section between front and rear sections of the vehicle inspection system conveyor and affecting to the inspection process and image quality caused by the in-situ stagnation of vehicles being inspected can be reduced or avoided. In whole-process through the scanning area imposing driving forces to vehicles being inspected by the vehicle inspection system conveyor helps to skip the handover process and simplify the control process, and with the handover process skipped, image quality is no longer affected by unstable handover process.

As shown in Fig. 1, in the present embodiment, the at least one first powered section comprises a first front-side powered section 11 arranged in front of the scanning area and a first rear-side powered section 15 arranged behind the scanning area. The first unpowered section is arranged between the first front-side powered section 11 and the first rear-side powered section 15.

In addition, the at least one first powered section in the present embodiment comprises a first intermediate powered section 13 disposed between the first front-side powered section 11 and the first rear-side powered section 15. The at least one first unpowered section comprises a first front-side unpowered section 12 located between the first front-side powered section 11 and the first intermediate powered section 13 and a first rear-side unpowered section 14 located between the first rear-side powered section 15 and the first intermediate powered section 13. The first intermediate powered section 13 helps to reduce the length of unpowered sections, thus achieving a more stable conveying of vehicles being inspected.

In the present embodiment, the at least one second powered section comprises a second intermediate powered section 23 located in the middle of the vehicle inspection system conveyor in front and rear directions. As shown in Fig. 1, the first unpowered section is located at a position in front and rear directions within the range of the second intermediate powered section 23 in front and rear directions.

In some embodiments, the first intermediate powered section 13 comprises a plurality of conveying rollers of a first chain roller conveyor, and the second intermediate powered section 23 comprises a plurality of conveying rollers of a second chain roller conveyor. As the position of gaps between the conveying rollers remains unchanged, X-rays can be transmitted through and detectors can be installed under the gaps, so as to allow scanned images of vehicles being inspected to be unaffected by the first intermediate powered section 13 and the second intermediate powered section 23.

Within the conveying range where vehicles being inspected are conveyed, the second conveying device 20 further comprises at least one second unpowered section which does not provide driving force to the vehicles being inspected, and the second unpowered section is located at a position in front and rear directions within the range of the at least one first powered section in front and rear directions. This setting enables the vehicle inspection system conveyor to smoothly convey vehicles being inspected.

The at least one second powered section comprises a second front-side powered section 21, a second intermediate powered section 23, and a second rear-side powered section 25, which are successively arranged in the front and rear directions. The second front-side powered section 21 is located in the front of the scanning area, and the second rear-side powered section 25 is located in the rear of the scanning area. The at least one second unpowered section comprises a second front-side unpowered section 22 located between the second front-side powered section 21 and the second intermediate powered section 23 and a second rear-side unpowered section 24 located between the second rear-side powered section 25 and the second intermediate powered section 23.

As shown in Fig. 1, in the present embodiment, the first conveying device 10 comprises a first front-section plate chain conveyor, a first chain roller conveyor and a first rear-section plate chain conveyor arranged in sequence in the front and rear directions. A horizontal section of the first front-section plate chain conveyor forms the first front-side powered section 11, and the steering portion of the first front-section plate chain conveyor near the first chain roller conveyor and the interval portion between the steering portion and conveying rollers of the first chain roller conveyor form the first front-side unpowered section 12. A horizontal section of the first rear-section plate chain conveyor forms the first rear-side powered section 15, and the steering portion of the first rear-section plate chain conveyor near the first chain roller conveyor and the interval portion between the steering portion and conveying rollers of the first chain roller conveyor form the first rear-side unpowered section 14. A plurality of conveying rollers of the first chain roller conveyor form the first intermediate powered section 13. Therefore, within the conveying range where vehicles being inspected are conveyed, the first conveying device 10 comprises three first powered sections and two first unpowered sections.

Similarly, the second conveying device 20 comprises a second front-section plate chain conveyor, a second chain roller conveyor and a second rear-section plate chain conveyor arranged in sequence in the front and rear directions. A horizontal section of the second front-section plate chain conveyor forms the second front-side powered section 21, and the steering portion of the second front-section plate chain conveyor near the second chain roller conveyor and the interval portion between the steering portion and conveying rollers of the second chain roller conveyor form the second front-side unpowered section 22. A horizontal section of the second rear-section plate chain conveyor forms the second rear-side powered section 25, and the steering portion of the second rear-section plate chain conveyor near the second chain roller conveyor and the interval portion between the steering portion and conveying rollers of the second chain roller conveyor form the second rear-side unpowered section 24. A plurality of conveying rollers of the second chain roller conveyor form the second intermediate powered section 23. Therefore, within the conveying range where vehicles being inspected are conveyed, the second conveying device 20 comprises three first powered sections and two first unpowered sections.

As shown in Fig. 1, a fan beam 30 is emitted by the scanning device of the vehicle inspection system, and the area scanned by the fan beam 30 forms the scanning area of the vehicle inspection system. Each plate chain conveyor and each chain roller conveyor are driven by their motors. By controlling the speed of each motor, vehicles being inspected are transported steadily from the front (entrance side) to the rear (exit side) of the scanning area to generate scanned images of the vehicles and complete the inspection process.

As shown in Fig. 1, in the present embodiment, the length of the second chain roller conveyor is larger than the length of the first chain roller conveyor. Therefore, the first front-side unpowered section 12 and the first rear-side unpowered section 14 fall into the scope of the second chain roller conveyor in front and rear directions.

The present disclosure further provides a vehicle inspection system comprising a vehicle inspection system conveyor disclosed in the present embodiment.

The above embodiments shall not constitute a limitation on the present disclosure. For example, in a variant embodiment of the above embodiment, the conveyance of vehicles being inspected may be completed even if one or more of the first chain roller conveyor, the second front-section plate chain conveyor and the second rear-section plate chain conveyor are cancelled. For another example, the first unpowered section may also be at a position in front and rear directions within the range of all or part of the second powered sections other than the second intermediate powered section. In a variant embodiment of the above embodiment, the first chain roller conveyor may be of the same length as the second chain roller conveyor, but the first chain roller conveyor and the second chain roller conveyor are staggered in front and rear directions.

The present disclosure is particularly applicable to vehicle inspection systems with a top-mounted radiation source for small vehicles and may also be used in other large-scale X-ray top-view imaging devices.

Finally, it is noted that the above embodiments are only used to explain the technical solution of the present invention and shall not be construed as limitation.

## Claims

1. A vehicle inspection system conveyor configured to convey a vehicle being inspected within a conveying range from front to rear through a scanning area of a vehicle inspection system, the vehicle inspection system conveyor comprising:
a first conveying device (10), within the conveying range where the vehicle being inspected is conveyed comprising at least one first powered section which provides driving force to the vehicle being inspected and at least one first unpowered section which does not provide driving force to the vehicle being inspected; and
a second conveying device (20), arranged side by side with the first conveying device (10) and within the conveying range where the vehicle being inspected is conveyed comprising at least one second powered section which provides driving force to the vehicle being inspected,
**characterised by** that
the first unpowered section is located at a position in front and rear directions within the range of the at least one second powered section in front and rear directions.

2. The vehicle inspection system conveyor according to claim 1, wherein the at least one first powered section comprises a first front-side powered section (11) arranged in the front of the scanning area and a first rear-side powered section (15) arranged in the rear of the scanning area, and the first unpowered section is arranged between the first front-side powered section (11) and the first rear-side powered section (15).

3. The vehicle inspection system conveyor according to claim 2, wherein the at least one first powered section further comprises a first intermediate powered section (13) arranged between the first front-side powered section (11) and the first rear-side powered section (15), and the at least one first unpowered section comprises a first front-side unpowered section (12) located between the first front-side powered section (11) and the first intermediate powered section (13) and a first rear-side unpowered section (14) located between the first rear-side powered section (15) and the first intermediate powered section (13).

4. The vehicle inspection system conveyor according to claim 3, wherein the first intermediate powered section (13) comprises a plurality of conveying rollers of a first chain roller conveyor.

5. The vehicle inspection system conveyor according to claim 1, wherein the at least one second powered section comprises a second intermediate powered section (23) located in the middle of the vehicle inspection system conveyor in front and rear directions.

6. The vehicle inspection system conveyor according to claim 5, wherein the first unpowered section is located at a position in front and rear directions within the range of the second intermediate powered section (23) in front and rear directions.

7. The vehicle inspection system conveyor according to claim 5, wherein the second intermediate powered section (23) comprises a plurality of conveying rollers of a second chain roller conveyor.

8. A vehicle inspection system conveyor according to any one of claims 1 to 7, wherein within the conveying range where the vehicle being inspected is conveyed, the second conveying device (20) further comprises at least one second unpowered section which does not provide driving forces to vehicles being inspected, and the second unpowered section is located at a position in front and rear directions within the range of the at least one first powered section in front and rear directions.

9. The vehicle inspection system conveyor according to claim 8, wherein the at least one second powered section comprises a second front-side powered section (21) , a second rear-side powered section (25), and a second intermediate powered section (23) successively arranged in front and rear directions, the second front-side powered section (21) arranged in the front side of the scanning area, the second rear-side powered section (25) arranged in the front side of the scanning area, and the second intermediate powered section (23) located between the second front-side powered section (21) and the second rear-side powered section (25), and the three sections are; the at least one second unpowered section comprises a second front-side unpowered section (22) located between the second front-side powered section (21) and the second intermediate powered section (23) and a second rear-side unpowered section (24) located between the second rear-side powered section (25) and the second intermediate powered section (24).

10. A vehicle inspection system, comprising a vehicle inspection system conveyor according to any one of claims 1 to 9.

## Patentansprüche

1. Fahrzeugprüfsystem-Beförderungsvorrichtung, die konfiguriert ist, ein Fahrzeug, das geprüft wird, in einem Beförderungsbereich von vorne nach hinten über eine Abtastfläche eines Fahrzeugprüfsystems zu befördern, wobei die Fahrzeugprüfsystem-Beförderungsvorrichtung Folgendes umfasst:
eine erste Beförderungsvorrichtung (10), die in dem Beförderungsbereich, in dem das Fahrzeug, das geprüft wird, befördert wird, mindestens einen ersten angetriebenen Abschnitt, der auf das Fahrzeug, das geprüft wird, eine Antriebskraft ausübt, und mindestens einen ersten nicht angetriebenen Abschnitt, der auf das Fahrzeug, das geprüft wird, keine Antriebskraft ausübt, umfasst; und
eine zweite Beförderungsvorrichtung (20), die neben der ersten Beförderungsvorrichtung (10) angeordnet ist und in dem Beförderungsbereich, in dem das Fahrzeug, das geprüft wird, befördert wird, mindestens einen zweiten angetriebenen Abschnitt, der auf das Fahrzeug, das geprüft wird, eine Antriebskraft ausübt, umfasst,
**dadurch gekennzeichnet, dass** der erste nicht angetriebene Abschnitt an einer Position in der Vorwärts/Rückwärts-Richtung im Bereich des mindestens einen zweiten angetriebenen Abschnitts in der Vorwärts/Rückwärts-Richtung angeordnet ist.

2. Fahrzeugprüfsystem-Beförderungsvorrichtung nach Anspruch 1, wobei der mindestens eine erste angetriebene Abschnitt einen ersten vorderen angetriebenen Abschnitt (11), der vorne in der Abtastfläche angeordnet ist, und einen ersten hinteren angetriebenen Abschnitts (15), der hinten in der Abtastfläche angeordnet ist, umfasst und der erste nicht angetriebene Abschnitt zwischen dem ersten vorderen angetriebenen Abschnitt (11) und dem ersten hinteren angetriebenen Abschnitt (15) angeordnet ist.

3. Fahrzeugprüfsystem-Beförderungsvorrichtung nach Anspruch 2, wobei der mindestens eine erste angetriebene Abschnitt ferner einen ersten zwischenliegenden angetriebenen Abschnitt (13), der zwischen dem ersten vorderen angetriebenen Abschnitt (11) und dem ersten hinteren angetriebenen Abschnitt (15) angeordnet ist, umfasst und der mindestens eine erste nicht angetriebene Abschnitt einen ersten vorderen nicht angetriebenen Abschnitt (12), der zwischen dem ersten vorderen angetriebenen Abschnitt (11) und dem ersten zwischenliegenden angetriebenen Abschnitt (13) angeordnet ist, und einen ersten hinteren nicht angetriebenen Abschnitt (14), der zwischen dem ersten hinteren angetriebenen Abschnitt (15) und dem ersten zwischenliegenden angetriebenen Abschnitt (13) angeordnet ist, umfasst.

4. Fahrzeugprüfsystem-Beförderungsvorrichtung nach Anspruch 3, wobei der erste zwischenliegende angetriebene Abschnitt (13) mehrere Beförderungswälzelemente einer ersten Wälzelement-Kettenbeförderungsvorrichtung umfasst.

5. Fahrzeugprüfsystem-Beförderungsvorrichtung nach Anspruch 1, wobei der mindestens eine zweite angetriebene Abschnitt einen zweiten zwischenliegenden angetriebenen Abschnitt (23) umfasst, der in der Mitte der Fahrzeugprüfsystem-Beförderungsvorrichtung in der Vorwärts/Rückwärts-Richtung angeordnet ist.

6. Fahrzeugprüfsystem-Beförderungsvorrichtung nach Anspruch 5, wobei der erste nicht angetriebene Abschnitt an einer Position in der Vorwärts/Rückwärts-Richtung im Bereich des zweiten zwischenliegenden angetriebenen Abschnitts (23) in der Vorwärts/Rückwärts-Richtung angeordnet ist.

7. Fahrzeugprüfsystem-Beförderungsvorrichtung nach Anspruch 5, wobei der zweite zwischenliegende angetriebene Abschnitt (23) mehrere Beförderungswälzelemente einer zweiten Wälzelement-Kettenbeförderungsvorrichtung umfasst.

8. Fahrzeugprüfsystem-Beförderungsvorrichtung nach einem der Ansprüche 1 bis 7, wobei die zweite Beförderungsvorrichtung (20) in dem Beförderungsbereich, in dem das Fahrzeug, das geprüft wird, befördert wird, ferner mindestens einen zweiten nicht angetriebenen Abschnitt, der auf Fahrzeuge, die geprüft werden, keine Antriebskräfte ausübt, umfasst und der zweite nicht angetriebene Abschnitt an einer Position in der Vorwärts/Rückwärts-Richtung im Bereich des mindestens einen ersten angetriebenen Abschnitts in der Vorwärts/Rückwärts-Richtung angeordnet ist.

9. Fahrzeugprüfsystem-Beförderungsvorrichtung nach Anspruch 8, wobei der mindestens eine zweite angetriebene Abschnitt einen zweiten vorderen angetriebenen Abschnitt (21), einen zweiten hinteren angetriebenen Abschnitt (25) und einen zweiten zwischenliegenden angetriebenen Abschnitt (23) umfasst, die in der Vorwärts/Rückwärts-Richtung nacheinander angeordnet sind, wobei der zweite vordere angetriebene Abschnitt (21) in der Vorderseite der Abtastfläche angeordnet ist, der zweite hintere angetriebene Abschnitt (25) in der Vorderseite der Abtastfläche angeordnet ist und der zweite zwischenliegende angetriebene Abschnitt (23) zwischen dem zweiten vorderen angetriebenen Abschnitt (21) und dem zweiten hinteren angetriebenen Abschnitt (25) angeordnet ist, und die drei Abschnitte sind; der mindestens eine zweite nicht angetriebene Abschnitt einen zweiten vorderen nicht angetriebenen Abschnitt (22), der zwischen dem zweiten vorderen angetriebenen Abschnitt (21) und dem zweiten zwischenliegenden angetriebenen Abschnitt (23) angeordnet ist, und einen zweiten hinteren nicht angetriebenen Abschnitt (24), der zwischen dem zweiten hinteren angetriebenen Abschnitt (25) und dem zweiten zwischenliegenden angetriebenen Abschnitt (24) angeordnet ist, umfasst.

10. Fahrzeugprüfsystem, das eine Fahrzeugprüfsystem-Beförderungsvorrichtung nach einem der Ansprüche 1 bis 9 umfasst.

## Revendications

1. Convoyeur de système d'inspection de véhicule configuré pour convoyer un véhicule qui est inspecté à l'intérieur d'une plage de convoyage d'avant en arrière à travers une zone de scannage d'un système d'inspection de véhicule, le convoyeur de système d'inspection de véhicule comprenant :
un premier dispositif de convoyage (10), à l'intérieur de la plage de convoyage dans laquelle le véhicule qui est inspecté est convoyé, comprenant au moins une première section électrique qui fournit une force d'entraînement au véhicule qui est inspecté et au moins une première section non électrique qui ne fournit pas de force d'entraînement au véhicule qui est inspecté ; et
un second dispositif de convoyage (20), agencé côte à côte avec le premier dispositif de convoyage (10) et à l'intérieur de la plage de convoyage dans laquelle le véhicule qui est inspecté est convoyé, comprenant une seconde section électrique qui fournit une force d'entraînement au véhicule qui est inspecté,
**caractérisé en ce que**
la première section non électrique est située à une position dans des directions avant et arrière à l'intérieur de la plage de ladite au moins une seconde section électrique dans des directions avant et arrière.

2. Convoyeur de système d'inspection de véhicule selon la revendication 1, dans lequel ladite au moins une première section électrique comprend une première section électrique côté avant (11) agencée à l'avant de la zone de scannage, et une première section électrique côté arrière (15) agencée à l'arrière de la zone de scannage, et la première section non électrique est agencée entre la première section électrique côté avant (11) et la première section électrique côté arrière (15).

3. Convoyeur de système d'inspection de véhicule selon la revendication 2, dans lequel ladite au moins une première section électrique comprend en outre une première section électrique intermédiaire (13) agencée entre la première section électrique côté avant (11) et la première section électrique côté arrière (15), et ladite au moins une première section non électrique comprend une première section non électrique côté avant (12) située entre la première section électrique côté avant (11) et la première section électrique intermédiaire (13), et une première section non électrique côté arrière (14) située entre la première section électrique côté arrière (15) et la première section électrique intermédiaire (13).

4. Convoyeur de système d'inspection de véhicule selon la revendication 3, dans lequel la première section électrique intermédiaire (13) comprend une pluralité de rouleaux de convoyage d'un premier convoyeur à rouleaux à chaîne.

5. Convoyeur de système d'inspection de véhicule selon la revendication 1, dans lequel ladite au moins une seconde section électrique comprend une seconde section électrique intermédiaire (23) située au milieu du convoyeur de système d'inspection de véhicule dans des directions avant et arrière.

6. Convoyeur de système d'inspection de véhicule selon la revendication 5, dans lequel la première section non électrique est située à une position dans des directions avant et arrière à l'intérieur de la plage de la seconde section électrique intermédiaire (23) dans des directions avant et arrière.

7. Convoyeur de système d'inspection de véhicule selon la revendication 5, dans lequel la seconde section électrique intermédiaire (23) comprend une pluralité de rouleaux de convoyage d'un second convoyeur à rouleaux à chaîne.

8. Convoyeur de système d'inspection de véhicule selon l'une quelconque des revendications 1 à 7, dans lequel, à l'intérieur de la plage de convoyage dans laquelle le véhicule qui est inspecté est convoyé, le second dispositif de convoyage (20) comprend en outre au moins une seconde section non électrique qui ne fournit pas de forces d'entraînement à des véhicules qui sont inspectés, et la seconde section non électrique est située à une position dans des directions avant et arrière à l'intérieur de la plage de ladite au moins une première section électrique dans des directions avant et arrière.

9. Convoyeur de système d'inspection de véhicule selon la revendication 8, dans lequel ladite au moins une seconde section électrique comprend une seconde section électrique côté avant (21), une seconde section électrique côté arrière (25) et une seconde section électrique intermédiaire (23) agencées successivement dans des directions avant et arrière, la seconde section électrique côté avant (21) étant agencée dans le côté avant de la zone de scannage, la seconde section électrique côté arrière (25) étant agencée dans le côté avant de la zone de scannage, et la seconde section électrique intermédiaire (23) étant située entre la seconde section électrique côté avant (21) et la seconde section électrique côté arrière (25), et qui sont les trois sections ; ladite au moins une seconde section non électrique comprend une section non électrique côté avant (22) située entre la seconde section électrique côté avant (21) et la seconde section électrique intermédiaire (23), et une seconde section non électrique côté arrière (24) située entre la seconde section électrique côté arrière (25) et la seconde section électrique intermédiaire (24).

10. Système d'inspection de véhicule comprenant un convoyeur de système d'inspection de véhicule selon l'une quelconque des revendications 1 à 9,
